# EUROPEAN PATENT SPECIFICATION

(11) **EP 3 533 671 B1**
(45) Date of publication and mention of the grant of the patent: **08.07.2020**
(21) Application number: 19158326.9
(22) Date of filing: 20.02.2019
(51) Int. Cl.: B60S 11/00, B62D 25/20

(54) **VEHICLE LOWER STRUCTURE AND JACKING METHOD**
FAHRZEUGUNTERSTRUKTUR UND HEBEVERFAHREN
STRUCTURE INFÉRIEURE DE VÉHICULE ET PROCÉDÉ DE LEVAGE

(30) Priority: 28.02.2018 JP 2018035848
(43) Date of publication of application: 04.09.2019
(73) Proprietor: TOYOTA JIDOSHA KABUSHIKI KAISHA, Toyota-shi, Aichi-ken, 471-8571 (JP)
(72) Inventor: YAMAMOTO, Yohei, Toyota-shi, Aichi-ken , 471-8571 (JP)
(74) Representative: Kuhnen & Wacker Patent- und Rechtsanwaltsbüro PartG mbB

(56) References cited:
- DE-A1-102015 218 792
- JP-A- 2006 219 069
- JP-A- 2008 247 120
- JP-B2- 5 751 149
- US-A- 4 431 212

## Description

### CROSS REFERENCE TO RELATED APPLICATION

This application claims priority to Japanese Patent Application No. 2018-035848 filed on February 28, 2018.

### TECHNICAL FIELD

The present specification relates to a vehicle lower structure in which a front-side jacking point where a garage jack is received is set in a front portion of a vehicle, and to a jacking method for a vehicle. Document JP 2008 247 120 A is considered to be the prior art closest to the subject-matter of the independent claims.

### BACKGROUND

Normally, a jacking point is set for a vehicle. A tray of a jack (specifically, a garage jack) abuts the jacking point at the time of jacking. As such a jacking point, a front-side jacking point and a rear-side jacking point are available. The front-side jacking point is used when a front portion of the vehicle is lifted. The rear-side jacking point is used when a rear portion of the vehicle is lifted. Each of the front-side jacking point and the rear-side jacking point is set at a position where the vehicle can be lifted stably. In addition, it is designed that the jacking point has strength to endure a reaction force from the jack.

In PATENT LITERATURE 1, a vehicle body structure for jacking is disclosed. In the vehicle body structure, a jack receiving member that receives the jack is arranged at a bottom of a rear-end cross member as a frame member of the vehicle. In PATENT LITERATURE 1, the jack receiving member has a box structure whose transverse cross section has a substantially square shape, and a bottom surface of the jack receiving member has the rear-side jacking point that the jack abuts.

### CITATION LIST

### PATENT LITERATURE

PATENT LITERATURE 1: JP 2006-219069 A

In a technique disclosed in PATENT LITERATURE 1, it is necessary to provide a dedicated member for the jack (the jack receiving member) at the jacking point, which results in increased cost and an increased number of components. Thus, it has conventionally been proposed to set the jacking point on an existing plate material provided in the vehicle. For example, there is a case where a plate material referred to as a shear plate is arranged on a bottom surface in the front portion of the vehicle for the purpose of stabilizing maneuverability of the vehicle. Some have proposed to set the jacking point on the shear plate. With such a configuration, the dedicated member for the jack does not have to be provided, and thus the cost and the number of components can be reduced.

In recent years, there has been a request to reduce thickness of such a plate material for the purpose of further reductions in weight and the cost of the vehicle. However, when the thickness of the plate material is reduced, there is been a case where the plate material cannot endure the reaction force from the jack at the time of jacking and is plastically deformed or damaged.

In view of the above, the present specification discloses a vehicle lower structure capable of further inhibiting plastic deformation and damage of a plate material on which a jacking point is set while reducing thickness of the plate material, and a jacking method.

### SUMMARY

A vehicle lower structure disclosed in the present specification includes: a plate material that is arranged on a bottom surface in a front portion of a vehicle and is formed with a jacking projection jutting downward at a position where a front-side jacking point is set; and a frame member that is arranged above the plate material. The plate material has a force-bearing area that continues from the rear of the jacking projection and vertically opposes a part of a lower end surface of the frame member.

With such a configuration, a tray of a garage jack abuts the force-bearing area, which continues from the rear of the jacking projection. Since this force-bearing area vertically opposes the part of the lower end surface of the frame member, deformation of the force-bearing area is inhibited by the frame member. Thus, it is possible to effectively prevent excessive bending of the plate material and therefore plastic deformation and damage of the plate material. As a result, while thickening of the plate material is minimized, the plastic deformation and the damage of the plate material can be further inhibited.

In this case, the frame member may at least have a vertical wall that extends in a vehicle height direction, and the vertical wall may be located substantially right above the force-bearing area.

A periphery of the vertical wall is especially high in strength and is thereby unlikely to be deformed. Since such a vertical wall is located substantially right above the force-bearing area, deformation of the force-bearing area can be further effectively inhibited, and the plastic deformation and the damage of the plate material can be further inhibited.

In addition, the plate material may further be formed with a force-bearing projection that continues from the rear of the jacking projection and juts downward by a smaller jutting amount than that of the jacking projection. The force-bearing area may be located within the force-bearing projection.

Since the projections and recesses such as the jacking projection and the force-bearing projection are formed around the force-bearing area, strength of the plate material itself can be improved, and the plastic deformation and the damage of the plate material can be further effectively inhibited.

The frame member may be a suspension member, and the plate material may be a shear plate, a front end of which is coupled to the suspension member and a rear end of which is coupled to another frame member or a body.

In a configuration that members such as the suspension member and the shear plate provided in an existing vehicle receive a reaction force from the tray of the garage jack, a dedicated member does not have to be provided. Thus, cost for the vehicle can be further reduced.

A jacking method for a vehicle disclosed in the present specification is a jacking method for jacking a vehicle using a garage jack, and the vehicle has: a plate material that is arranged at a bottom surface in a front portion of the vehicle; and a frame member that is arranged above the plate material. The plate material is formed with a jacking projection jutting downward at a position where a front-side jacking point is set. The plate material has a force-bearing area that continues from the rear of the jacking projection and vertically opposes a part of a lower end surface of the frame member. The vehicle is jacked up by causing a tray of the garage jack to abut the plate material such that the jacking projection is fitted into the tray and a peripheral edge of the tray abuts the force-bearing area.

With such a configuration, the tray of the garage jack abuts the force-bearing area, which continues from the rear of the jacking projection. Since this force-bearing area vertically opposes the part of the lower end surface of the frame member, deformation of the force-bearing area is inhibited by the frame member. Thus, it is possible to effectively prevent excessive bending of the plate material and therefore plastic deformation and damage of the plate material. As a result, while thickening of the plate material is minimized, the plastic deformation and the damage of the plate material can be further inhibited.

According to the vehicle lower structure and the jacking method disclosed in the present specification, the tray of the garage jack abuts the force-bearing area, which continues from the rear of the jacking projection. Since this force-bearing area vertically opposes the part of the lower end surface of the frame member, the deformation of the force-bearing area is inhibited by the frame member. Thus, it is possible to effectively prevent excessive bending of the plate material and therefore the plastic deformation and the damage of the plate material. As a result, while thickening of the plate material is minimized, the plastic deformation and the damage of the plate material can be further inhibited.

### BRIEF DESCRIPTION OF DRAWINGS

Embodiment(s) of the present disclosure will be described based on the following figures, wherein:
FIG. 1 is a schematic view in which a vehicle is seen from below;
FIG. 2 is a view of a situation where a front portion of the vehicle is jacked up;
FIG. 3 is an enlarged view of section A in FIG. 1;
FIG. 4 is a cross-sectional view taken along B-B in FIG. 3;
FIG. 5 is a cross-sectional view taken along B-B at the time of jacking;
FIG. 6 is a view illustrating a dimension of each section; and
FIG. 7 is a view of another configuration of a suspension member.

### DESCRIPTION OF EMBODIMENTS

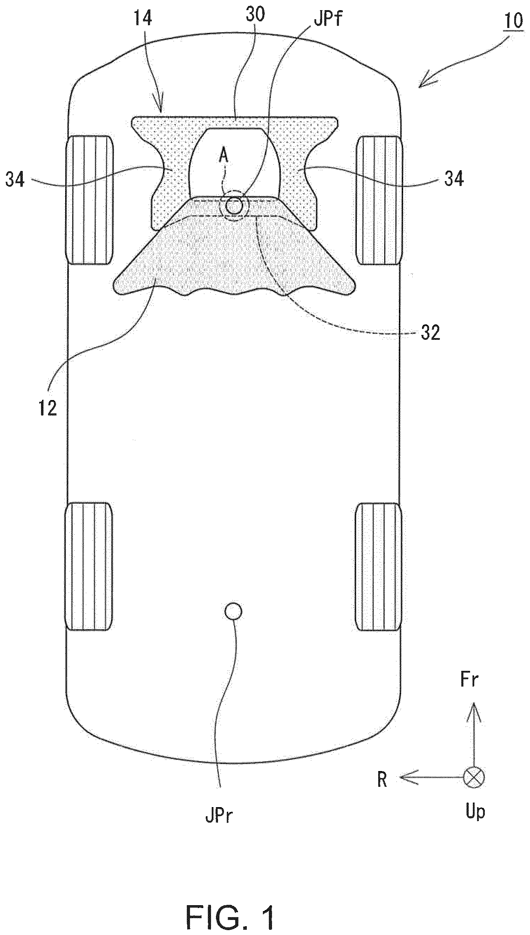

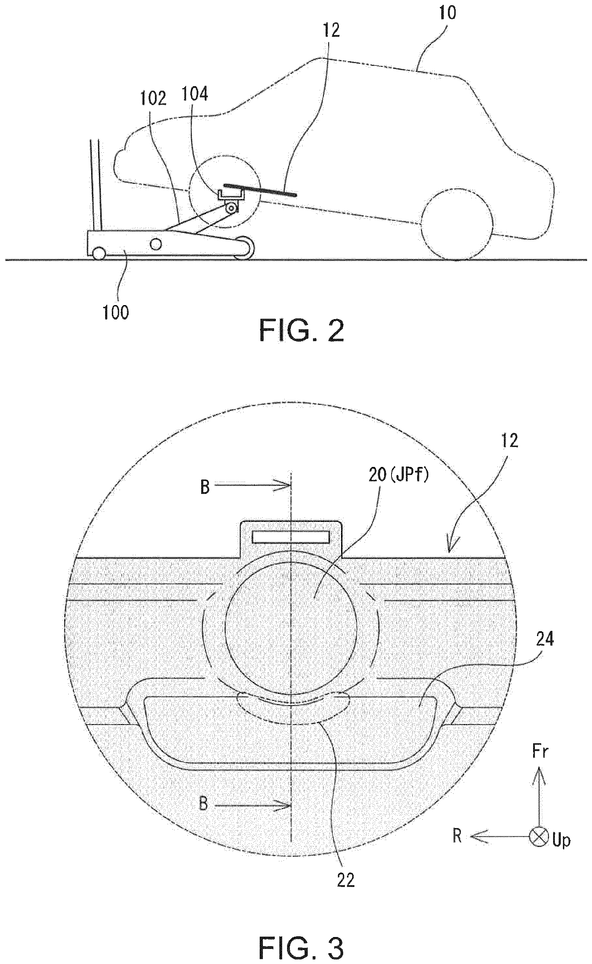

A description will hereinafter be given of a lower structure of a vehicle 10 with reference to the drawings. FIG. 1 is a view illustrating a jacking point of the vehicle 10 and is a schematic view in which the vehicle 10 is seen from below. FIG. 2 is a view of a situation where a front portion of the vehicle 10 is jacked up. Note that FIG. 1 only illustrates members that are particularly related to a front-side jacking point JPf, and the other members are not illustrated. In the following drawings, Fr, R, and Up respectively mean a front direction of the vehicle 10, a right direction of the vehicle 10, and an upward direction of the vehicle 10. In the present specification, all of front, rear, left, and right of the vehicle 10 represent front, rear, left, and right that are seen from a driver.

There is a case where the vehicle 10 is jacked up when the vehicle 10 is repaired or inspected. In the case where only one of left and right wheels is lifted, a pantograph jack is frequently used. In the case where both of the left and right wheels are lifted at the same time, a garage jack 100 is frequently used. As illustrated in FIG. 2, the garage jack 100 has: an arm 102 that can be raised or lowered by a hydraulic pressure or the like; and a jack tray 104 that is attached to a tip of the arm 102. The jack tray 104 is a portion that abuts a bottom of the vehicle 10 at the time of jacking. This jack tray 104 usually has a substantially dish shape whose peripheral edge is raised upward.

The front-side jacking point JPf and a rear-side jacking point JPr are set on a bottom surface of the vehicle 10. Each of the front-side jacking point JPf and a rear-side jacking point JPr is a point that the jack tray 104 of the garage jack 100 abuts. That is, when the front portion of the vehicle 10 is jacked up, the jack tray 104 of the garage jack 100 abuts the front-side jacking point JPf. When a rear portion of the vehicle 10 is jacked up, the jack tray 104 of the garage jack 100 abuts the rear-side jacking point JPr. Hereinafter, a description will particularly be given of a configuration around the front-side jacking point JPf.

As is apparent from FIG. 1, the front-side jacking point JPf is located in the front portion of the vehicle 10 and substantially at a center in a vehicle width direction. This front-side jacking point JPf is set on a plate material referred to as a shear plate 12. That is, when the front portion of the vehicle 10 is jacked up, the jack tray 104 of the garage jack 100 abuts the shear plate 12.

The shear plate 12 is a plate material that is made of metal (for example, aluminum-based metal or the like). As illustrated in FIG. 1, the shear plate 12 has a substantially trapezoidal shape, a vehicle width dimension of which is increased toward the rear. A part of this shear plate 12 is fastened to a suspension member 14, and the other part thereof is fastened to another frame member or a body (not illustrated). With provision of such a shear plate 12, torsional rigidity of a vehicle body is improved, and maneuvering stability of the vehicle 10 is improved. The front-side jacking point JPf is set at a center of this shear plate 12 in the vehicle width direction and near a front end thereof.

The suspension member 14 is a frame member that supports suspension links and is also referred to as a cross member. The suspension member 14 in this Example has a substantially square shape and has: a front cross section 30 that extends in the vehicle width direction; a rear cross section 32 that extends in the vehicle width direction behind the front cross section 30; and paired side sections 34 that couple both ends of the front cross section 30 and the rear cross section 32. Of these sections, the rear cross section 32 traverses the shear plate 12 in the vehicle width direction at a position near the front end of the shear plate 12.

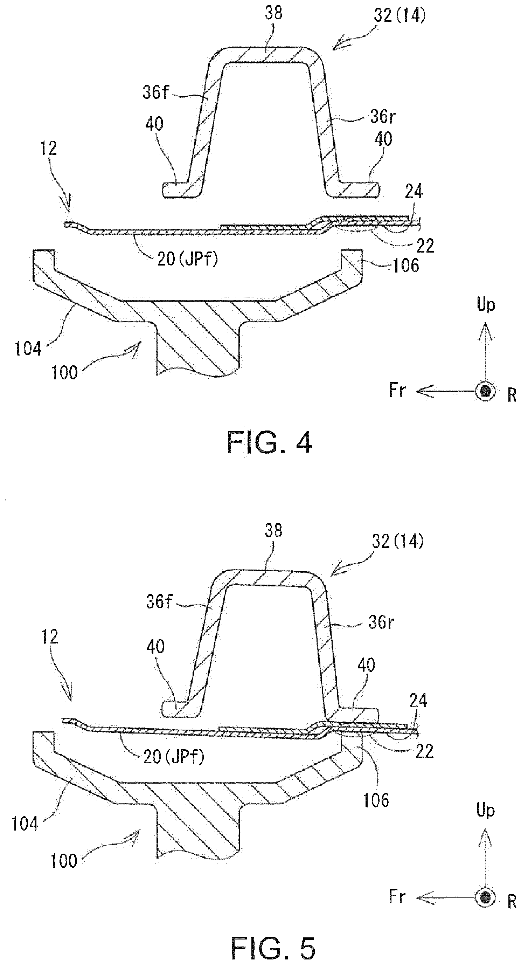

Next, a further detailed description will be given of a structure around the front-side jacking point JPf with reference to FIG. 3 and FIG. 4. FIG. 3 is an enlarged view of section A in FIG. 1. FIG. 4 is a cross-sectional view taken along B-B in FIG. 3.

In the shear plate 12, a jacking projection 20 that is a circular projection jutting downward is formed at a position where the front-side jacking point JPf is set. This jacking projection 20 serves as a mark that indicates the front-side jacking point JPf. A diameter of this jacking projection 20 is smaller than an inner diameter of the jack tray 104 of the garage jack 100. Thus, the jacking projection 20 is completely fitted into the jack tray 104.

A force-bearing area 22 continues from the rear of the jacking projection 20. The force-bearing area 22 is an area that continues from the rear of the jacking projection 20 and opposes a lower end surface of the suspension member 14. When the jack tray 104 abuts the shear plate 12, a rear end edge of the jack tray 104 abuts this force-bearing area 22. When the vehicle 10 is jacked up, a reaction force from the jack tray 104 is primarily applied to this force-bearing area 22. That is, when the vehicle 10 is being jacked up, as illustrated in FIG. 2, the entire vehicle 10 including the shear plate 12 is tilted downward to the rear. As a result, only the rear end edge of the jack tray 104 abuts the shear plate 12. Thus, the force-bearing area 22, which abuts the rear end edge of the jack tray 104, receives the reaction force from the jack tray 104.

This force-bearing area 22 is located within a force-bearing projection 24. The force-bearing projection 24 is a substantially rectangular projection that continues from the rear of the jacking projection 20. This force-bearing projection 24 is a projection that juts downward, and a jutting amount thereof is smaller than a jutting amount of the jacking projection 20. Accordingly, a step is formed between the jacking projection 20 and the force-bearing projection 24. Due to this step, the jack tray 104 is prevented from being displaced, and thus the jack tray 104 can easily abut the appropriate position.

Here, in order to prevent plastic deformation and damage of the shear plate 12 that are associated with jacking, it is necessary to sufficiently increase strength of the force-bearing area 22. As a method of improving the strength, thickening of the shear plate 12 is considered. However, thickening of the shear plate 12 results in an increased amount of a material and increased weight of the vehicle 10, and further leads to other problems such as increased cost and degraded fuel economy. In addition, as described above, the shear plate 12 is primarily arranged for the purpose of improving maneuvering stability. However, in the case where the shear plate 12 is excessively thickened, the maneuvering stability is possibly degraded.

In view of the above, in this Example, in order to inhibit plastic deformation and damage of the shear plate 12 associated with jacking while minimizing thickening of the shear plate 12, the shear plate 12 and the suspension member 14 are arranged at specified positions. More specifically, in this Example, as illustrated in FIG. 4, the shear plate 12 and the suspension member 14 are arranged such that the force-bearing area 22, which opposes a part of a lower end surface of the rear cross section 32 in the suspension member 14, is arranged at the rear of the jacking projection 20.

More specifically, in this Example, the rear cross section 32 has a substantially U-shaped cross section and has: paired vertical walls 36 (a front vertical wall 36f and a rear vertical wall 36r), each of which extends in a vehicle height direction; and a roof wall 38 that connects upper ends of these paired vertical walls 36. The rear cross section 32 further has bottom walls 40, each of which bulges outward from a lower end of the vertical wall 36. The force-bearing area 22 is an area that vertically opposes the lower end surface of this rear cross section 32 and continues from the rear of the jacking projection 20. In addition, in this Example, the suspension member 14 and the shear plate 12 are arranged such that the rear vertical wall 36r is located substantially right above the force-bearing area 22.

With such a configuration, the force-bearing area 22 is supported by the lower end surface of the suspension member 14. Thus, the plastic deformation and the damage around the force-bearing area 22 are effectively prevented. A description will be given of the effective prevention of plastic deformation and damage around the force-bearing area 22 with reference to FIG. 4 and FIG. 5. As described above, FIG. 4 is a cross-sectional view taken along B-B in FIG. 3. FIG. 5 is a cross-sectional view at the time of jacking.

As illustrated in FIG. 4, before jacking, that is, in a state before the jack tray 104 abuts the shear plate 12, a slight clearance exists between the shear plate 12 and the lower end surface of the suspension member 14, and the shear plate 12 and the lower end surface of the suspension member 14 separate from each other. When the jack tray 104 pushes the force-bearing area 22 from below in this state, the shear plate 12 is bent (elastically deformed) with the force-bearing area 22 being the center and comes in contact with the lower end surface (the bottom wall 40) of the suspension member 14. That is, a state illustrated in FIG. 5 occurs. Then, due to the contact with the lower end surface of the suspension member 14, further deformation of the force-bearing area 22 is inhibited.

The suspension member 14 is made of metal (for example, aluminum-based metal or the like), and thickness thereof is sufficiently greater than thickness of the shear plate 12. For example, the thickness of the suspension member 14 is 5 to 20 times the thickness of the shear plate 12. Accordingly, compared to the shear plate 12, the suspension member 14 has extremely high strength and is less likely to be deformed. Since the force-bearing area 22 of the shear plate 12 contacts the lower end surface of the suspension member 14, which is unlikely to be deformed, further deformation of the force-bearing area 22 is inhibited. As a result, the shear plate 12 is inhibited from being excessively bent, and thus plastic deformation and damage of the shear plate 12 can be effectively prevented.

Here, in order to prevent the plastic deformation and the damage of the shear plate 12, the rear end edge of the jack tray 104 has to reliably abut the force-bearing area 22 (that is, the area that opposes the lower end surface of the suspension member 14). In this Example, the jacking projection 20, which juts downward, is provided at the position where the front-side jacking point JPf is set, and the step is formed around the jacking projection 20. Due to this step, significant displacement of the jack tray 104 is effectively prevented, and the position of the jack tray 104 is approximately defined. As a result, a rear end edge 106 of the jack tray 104 can further reliably abut the force-bearing area 22 (the area that opposes the lower end surface of the suspension member 14), and therefore plastic deformation and damage of the shear plate 12 can be more reliably inhibited.

In addition, in this Example, the vertical wall 36 of the suspension member 14 is located substantially right above the force-bearing area 22. In this way, deformation of the suspension member 14 and therefore plastic deformation and damage of the shear plate 12 can be more reliably inhibited. That is, of a bottom surface of the suspension member 14, a portion around each of the vertical walls 36 has particularly high strength and is thereby unlikely to be bent. Since such a vertical wall 36 is located substantially right above the force-bearing area 22, deformation of the force-bearing area 22 can also be reliably inhibited.

Furthermore, in this Example, the plural projections and recesses, such as the jacking projection 20 and the force-bearing projection 24, are formed in the shear plate 12. By forming such projections and recesses, the strength of the shear plate 12 itself is improved, and plastic deformation and damage of the shear plate 12 are further reliably prevented.

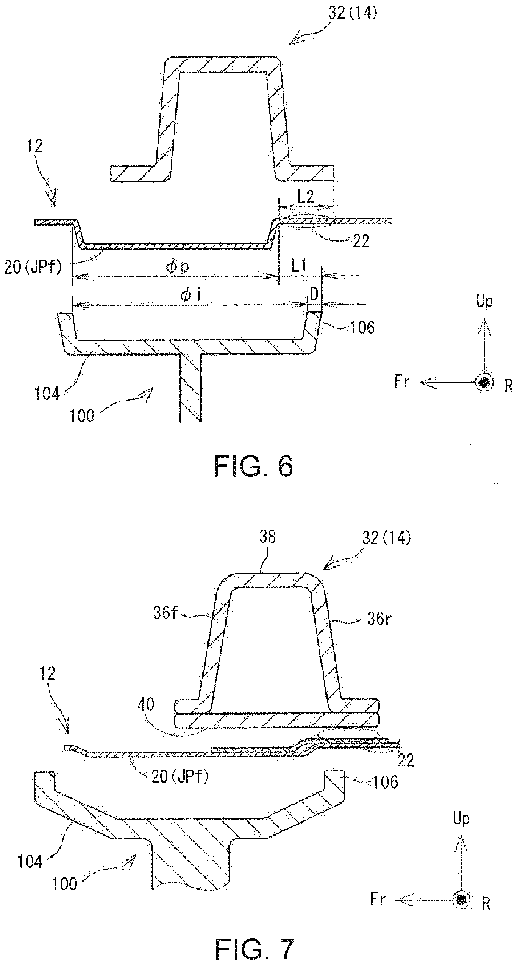

Here, a description will be given of a dimension of each of the sections with reference to FIG. 6. FIG. 6 is a schematic view of the suspension member 14, the shear plate 12, and the jack tray 104. First, in order to position the jacking projection 20 in the inside of the jack tray 104, a diameter φp of the jacking projection 20 naturally has to be smaller than an inner diameter φi of the jack tray 104.

In addition, in order to effectively inhibit deformation of the shear plate 12, the rear end edge 106 of the jack tray 104 has to abut the force-bearing area 22. In the shear plate 12, the force-bearing area 22 is the area that continues from the rear of the jacking projection 20 and opposes the lower end surface of the suspension member 14. Accordingly, the force-bearing area 22 ranges from a rear end edge of the jacking projection 20 to a rear end of the bottom wall 40 of the suspension member 14. A longitudinal distance of this force-bearing area 22 is set as L2. Meanwhile, a range that the rear end edge 106 of the jack tray 104 possibly abuts is a range having a distance L1 = (φi - φp) + D from the rear end edge of the jacking projection 20. Note that D represents thickness of the peripheral edge of the jack tray 104. That is, in order to effectively inhibit deformation of the shear plate 12, the dimension of each of the sections is preferably set to satisfy L2 > (φi - φp) + D.

Next, a description will be given of a flow of jacking of such a vehicle 10. In the case where it is desired to jack up the front portion of the vehicle 10, a user slides the garage jack 100 under the front portion of the vehicle 10 and positions the jack tray 104 substantially right under the jacking projection 20. In this state, the arm 102 is raised until the jack tray 104 abuts the shear plate 12. In the case where the jack tray 104 is displaced with respect to the jacking projection 20 at a time point at which the jack tray 104 abuts the shear plate 12, the position of the jack tray 104 is adjusted such that the jacking projection 20 is fitted into the jack tray 104.

Once the jacking projection 20 is brought into a fitted state into the jack tray 104, the rear end edge 106 of the jack tray 104 naturally abuts the force-bearing area 22. In this state, the arm 102 is further raised to lift the front portion of the vehicle 10. At this time, a load of the vehicle 10 is applied to the rear end edge 106 of the jack tray 104, and the reaction force from the jack tray 104 is applied to the force-bearing area 22. When receiving this reaction force, the shear plate 12 is bent with the force-bearing area 22 being the center, and the force-bearing area 22 comes in contact with the bottom wall 40 of the suspension member 14. In this state, further deformation of the shear plate 12 is inhibited, and plastic deformation and damage of the shear plate 12 are effectively prevented.

Then, when the vehicle 10 is jacked up to desired height, a rigid rack is arranged under the lifted vehicle body. Thereafter, the arm 102 of the garage jack 100 is gradually lowered, and the vehicle body is placed on the rigid rack. In this state, desired work (for example, tire replacement or the like) is performed. Once the required work is completed, the vehicle 10 is jacked down, and the rigid rack and the garage jack 100 are removed from the vehicle body in reverse order from the above-described order.

As is apparent from the description so far, according to this Example, the jack tray 104 is positioned such that the jacking projection 20 is fitted into the jack tray 104, and the vehicle 10 is then jacked up. In this way, the area of the shear plate 12 that receives the reaction force from the jack tray 104 reliably contacts the lower end surface of the suspension member 14. As a result, it is possible to further reliably prevent excessive bending of the shear plate 12 and therefore plastic deformation and damage of the shear plate 12.

Note that the description so far merely constitutes one example. As long as the plate material, which is formed with the jacking projection 20, has the force-bearing area 22, which continues from the rear of the jacking projection 20 and opposes the lower end surface of the frame member, other configurations may be appropriately changed. For example, in the description so far, the rear cross section 32 (the suspension member 14) has a substantially U-shaped cross section. However, as illustrated in FIG. 7, the rear cross section 32 may have a substantially square-shaped cross section that has the bottom wall 40 connecting the lower ends of the paired vertical walls 36. Also, in this case, the lower end of the vertical wall 36 with high strength is desirably positioned within the area that the rear end edge 106 of the jack tray 104 abuts (the area having L1 from the rear end edge of the jacking projection 20).

In addition, in the description so far, the suspension member 14 is exemplified as the frame member that the shear plate 12 contacts. However, the frame member that the shear plate 12 contacts is not limited to the suspension member 14 and may be another frame member. Furthermore, the plate material, which is formed with the jacking projection 20, may be another plate material instead of the shear plate 12.

## Claims

1. A vehicle lower structure comprising:
a plate material (12) that is arranged on a bottom surface in a front portion of a vehicle and is formed with a jacking projection (20) jutting downward at a position where a front-side jacking point (JPf) is set; and
a frame member (14) that is arranged above the plate material (12), wherein
the plate material (12) has a force-bearing area (22) that continues from the rear of the jacking projection (20) and vertically opposes a part of a lower end surface of the frame member (14).

2. The vehicle lower structure according to claim 1, wherein
the frame member (14) at least has a vertical wall (36r) that extends in a vehicle height direction, and
the vertical wall (36r) is located substantially right above the force-bearing area (22).

3. The vehicle lower structure according to claim 1, wherein
the plate material (12) is further formed with a force-bearing projection (24) that continues from the rear of the jacking projection (20) and juts downward by a smaller jutting amount than that of the jacking projection (20), and
the force-bearing area (22) is located within the force-bearing projection (24).

4. The vehicle lower structure according to claim 2, wherein
the plate material (12) is further formed with a force-bearing projection (24) that continues from the rear of the jacking projection (20) and juts downward by a smaller jutting amount than that of the jacking projection (20), and
the force-bearing area (22) is located within the force-bearing projection (24).

5. The vehicle lower structure according to any one of claims 1 to 4, wherein
the frame member (14) is a suspension member (14), and
the plate material (12) is a shear plate (12), a front end of which is coupled to the suspension member (14) and a rear end of which is coupled to another frame member or a body.

6. A jacking method for jacking a vehicle using a garage jack (100), the vehicle having: a plate material (12) that is arranged on a bottom surface in a front portion of the vehicle; and a frame member that is arranged above the plate material (12), wherein
the plate material (12) is formed with a jacking projection (20) jutting downward at a position where a front-side jacking point (JPf) is set,
the plate material (12) has a force-bearing area (22) that continues from the rear of the jacking projection (20) and vertically opposes a part of a lower end surface of the frame member (14), and
the vehicle is jacked up by causing a tray (104) of the garage jack (100) to abut the plate material (12) such that the jacking projection (20) is fitted into the tray (104) and a peripheral edge of the tray (104) abuts the force-bearing area (22).

## Patentansprüche

1. Fahrzeug-Unterstruktur, aufweisend:
ein Plattenmaterial (12), das auf einer Bodenoberfläche in einem Vorderabschnitt eines Fahrzeugs angeordnet ist und mit einem Abstützvorsprung (20) versehen ist, der an einer Position nach unten ragt, an der ein Vorderseiten-Abstützpunkt (JPf) definiert ist; und
ein Rahmenelement (14), das über dem Plattenmaterial (12) angeordnet ist, wobei das Plattenmaterial (12) eine krafttragende Fläche (22) aufweist, die von der Rückseite des Abstützvorsprungs (20) fortgesetzt wird und einem Teil einer unteren Endoberfläche des Rahmenelements (14) vertikal gegenüberliegt.

2. Fahrzeug-Unterstruktur nach Anspruch 1, wobei
das Rahmenelement (14) zumindest eine vertikale Wand (36r) aufweist, die in einer Fahrzeughöhenrichtung verläuft, und
sich die vertikale Wand (36r) im Wesentlichen genau über der krafttragenden Fläche (22) befindet.

3. Fahrzeug-Unterstruktur nach Anspruch 1, wobei
das Plattenmaterial (12) ferner mit einem krafttragenden Vorsprung (24) gebildet ist, der von der Rückseite des Abstützvorsprungs (20) fortgesetzt wird und um eine kürzere Strecke nach unten ragt als der Abstützvorsprung (20), und
sich die krafttragende Fläche (22) innerhalb des krafttragenden Vorsprungs (24) befindet.

4. Fahrzeug-Unterstruktur nach Anspruch 2, wobei
das Plattenmaterial (12) ferner mit einem krafttragenden Vorsprung (24) gebildet ist, der von der Rückseite des Abstützvorsprungs (20) fortgesetzt wird und um eine kürzere Strecke nach unten ragt als der Abstützvorsprung (20), und
sich die krafttragende Fläche (22) innerhalb des krafttragenden Vorsprungs (24) befindet.

5. Fahrzeug-Unterstruktur nach einem der Ansprüche 1 bis 4, wobei
das Rahmenelement (14) ein Aufhängungselement (14) ist, und
das Plattenmaterial (12) eine Abscherplatte (12) ist, deren vorderes Ende mit dem Aufhängungselement (14) verbunden ist und deren hinteres Ende mit einem anderen Rahmenelement oder einem Körper verbunden ist.

6. Abstütz-Verfahren zum Abstützen eines Fahrzeugs unter Verwendung eines Rangier-Wagenhebers (100), wobei das Fahrzeug aufweist: ein Plattenmaterial (12), das auf einer Bodenoberfläche in einem Vorderabschnitt des Fahrzeugs angeordnet ist; und ein Rahmenelement, das über dem Plattenmaterial (12) angeordnet ist, wobei
das Plattenmaterial (12) mit einem Abstützvorsprung (20) gebildet ist, der an einer Position nach unten ragt, an der ein Vorderseiten-Abstützpunkt (JPf) definiert ist, das Plattenmaterial (12) eine krafttragende Fläche (22) aufweist, die von der Rückseite des Abstützvorsprungs (20) fortgesetzt wird und einem Teil einer unteren Endoberfläche des Rahmenelements (14) vertikal gegenüberliegt, und
das Fahrzeug dadurch abgestützt wird, dass eine Auflage (104) des Rangier-Wagenhebers (100) an das Plattenmaterial (12) anstößt, so dass der Abstützvorsprung (20) in die Auflage (104) eingepasst wird und eine periphere Kante der Auflage (104) an die krafttragende Fläche (22) anstößt.

## Revendications

1. Structure inférieure de véhicule comprenant :
une matière en plaque (12) qui est disposée sur une surface inférieure dans une partie avant d'un véhicule et est formée avec une saillie de levage (20) qui dépasse vers le bas dans une position où un appui de levage du côté avant (JPf) est prévu; et
un élément de châssis (14) qui est disposé au-dessus de la matière en plaque (12), dans laquelle
la matière en plaque (12) ayant une zone de support de force (22) qui continue depuis l'arrière de la saillie de levage (20) et s'oppose verticalement à une partie d'une surface d'extrémité inférieure de l'élément de châssis (14).

2. Structure inférieure de véhicule selon la revendication 1, dans laquelle
l'élément de châssis (14) a au moins une paroi verticale (36r) qui s'étend dans une direction de hauteur de véhicule, et
la paroi verticale (36r) est située essentiellement juste au-dessus de la zone de support de force (22).

3. Structure inférieure de véhicule selon la revendication 1, dans laquelle
la matière en plaque (12) est en outre formée avec une saillie de support de force (24) qui continue depuis l'arrière de la saillie de levage (20) et dépasse vers le bas d'une valeur de dépassement plus petite que celle de la saillie de levage (20), et
la zone de support de force (22) se trouve dans la saillie de support de force (24).

4. Structure inférieure de véhicule selon la revendication 2, dans laquelle
la matière en plaque (12) est en outre formée avec une saillie de support de force (24) qui continue depuis l'arrière de la saillie de levage (20) et dépasse vers le bas d'une valeur de dépassement plus petite que celle de la saillie de levage (20), et
la zone de support de force (22) se trouve dans la saillie de support de force (24).

5. Structure inférieure de véhicule selon l'une quelconque des revendications 1 à 4, dans laquelle
l'élément de châssis (14) est un élément de suspension (14), et
la matière en plaque (12) est une plaque de cisaillement (12), dont une extrémité avant est reliée à l'élément de suspension (14) et dont une extrémité arrière est reliée à un autre élément de châssis ou à une carrosserie.

6. Procédé de levage pour soulever un véhicule en utilisant un cric de garage (100), le véhicule ayant : une matière en plaque (12) qui est disposée sur une surface inférieure dans une partie avant du véhicule ; et un élément de châssis qui est disposé au-dessus de la matière en plaque (12), selon lequel
la matière en plaque (12) est formée avec une saillie de levage (20) qui dépasse vers le bas dans une position où un appui de levage du côté avant (JPf) est prévu,
la matière en plaque (12) a une zone de support de force (22) qui continue depuis l'arrière de la saillie de levage (20) et s'oppose verticalement à une partie d'une surface d'extrémité inférieure de l'élément de châssis (14), et
le véhicule est soulevé en amenant un plateau (104) du cric de garage (100) à buter contre la matière en plaque (12) de telle sorte que la saillie de levage (20) est montée dans le plateau (104) et un bord périphérique du plateau (104) bute contre la zone de support de force (22).
